# EUROPÄISCHE PATENTSCHRIFT

(11) **EP 1 607 310 B1**
(45) Veröffentlichungstag und Bekanntmachung des Hinweises auf die Patenterteilung: **18.10.2006**
(21) Anmeldenummer: 05005079.8
(22) Anmeldetag: 09.03.2005
(51) Int. Cl.: B62D 17/00, B60B 35/00

(54) **Radträger aus Stahlblech**
Steel plate wheel support
Support de roue en tôle d'acier

(30) Priorität: 16.06.2004 DE 102004028844
(43) Veröffentlichungstag der Anmeldung: 21.12.2005
(73) Patentinhaber: Benteler Automobiltechnik GmbH, 33104 Paderborn (DE)
(72) Erfinder: Tigges, Dominique, 33161 Hövelhof (DE)
(74) Vertreter: Griepenstroh, Jörg

(56) Entgegenhaltungen:
- EP-A- 1 361 084
- EP-A- 1 380 455
- GB-A- 729 039
- GB-A- 2 138 079
- US-A- 6 086 162
- US-A1- 2003 090 079

## Beschreibung

Die Erfindung betrifft einen Radträger aus Stahlblech gemäß den Merkmalen im Oberbegriff des Anspruchs 1.

Ein derartiger Radträger zählt durch die US-PS 6,086,162 zum Stand der Technik. Er ist U-förmig ausgebildet und setzt sich aus einem Steg sowie seitlich des Stegs vorgesehenen Schenkeln zusammen. Die Schenkel dienen der Festlegung des Radträgers an einer Fahrzeugachse, während im Steg Durchbrechungen, insbesondere in Form von Bohrungen, für Schraubbolzen vorgesehen sind, über welche die Radlagerung festgelegt wird.

Das Fahrverhalten eines Kraftfahrzeugs ist unter anderem von den Spur- und Sturzwerten der Räder abhängig. Die Einstellung der Spur- und Sturzwerte wird in der überwiegenden Mehrzahl der Fälle durch eine mechanische Bearbeitung der Stirnseiten der Stege der Radträger durchgeführt, um nach dem Verschweißen der Radträger mit der Fahrzeugachse die dadurch bedingten unvermeidbaren Toleranzen aus Verzug und Positionierung einwandfrei ausgleichen zu können. Dazu ist es bekannt, den Steg und damit auch die Schenkel eines Radträgers aus Stahlblech mit einer solchen Blechdicke zu versehen, dass durch eine spanabhebende Bearbeitung der Stirnseite des Stegs die gewünschten Werte eingestellt werden können. Eine weitere Möglichkeit bei einem Radträger aus Stahlblech besteht darin, diesen zwar hinsichtlich der Blechdicke dünner zu gestalten, indessen auf die Stirnseite des Stegs eine plattenartige Verstärkung aufzuschweißen, die dann ihrerseits in dem gewünschten Maße spanabhebend bearbeitet werden kann, um Spur- und Sturzwerte der Räder einstellen zu können.

Nachteilig an den Maßnahmen des Standes der Technik ist nicht nur das höhere Gewicht, sondern es fallen auch nicht unerhebliche Mehrkosten an.

Der Erfindung liegt - ausgehend vom Stand der Technik - die Aufgabe zugrunde, einen Radträger aus Stahlblech zu schaffen, bei welchem die notwendigen spanabhebenden Bearbeitungen zur Einstellung der Spur- und Sturzwerte der Räder nach dem Anschweißen des Radträgers an eine Fahrzeugachse ohne zusätzlichen Gewichts- und Fertigungsaufwand durchgeführt werden können.

Diese Aufgabe wird mit den im kennzeichnenden Teil des Anspruchs 1 angegebenen Merkmalen gelöst.

Danach werden jetzt umfangsseitig der Durchbrechungen für die Schraubbolzen Oberflächenabschnitte vorgesehen, die gegenüber den angrenzenden Oberflächenbereichen der Stirnseite des Stegs vorstehen. Diese erhabenen Abschnitte werden beim spanlosen Umformen des Radträgers aus einer Blechplatine dadurch mit hergestellt, dass der für die erhabenen Abschnitte notwendige Werkstoff aus dem Material gewonnen wird, das sich in den für die Durchbrechungen vorgesehenen Stegbereichen befindet. Dieses Material muss ohnehin zur Schaffung der Durchbrechungen zwecks Durchtritt der Schraubbolzen entfernt werden, so dass jedenfalls ein Teil dieses Materials genutzt werden kann, um die erhabenen Abschnitte zu bilden.

Die erhabenen Abschnitte können dann zur Einstellung der Spur- und Sturzwerte der Räder bearbeitet werden, um die Toleranzen aus Verzug und Positionierung des Radträgers nach dem Anschweißen an die Fahrzeugachse auszugleichen. Durch die teilweise oder vollständige Abarbeitung der erhabenen Abschnitte wird der Steg des Radträgers neben den erhabenen Abschnitten nicht durch eine spanabhebende Bearbeitung geschwächt. Außerdem wird mit der Erfindung der Vorteil erzielt, dass durch den lokalen Umformprozess die mechanischen Eigenschaften verbessert werden, welche bei der Auslegung eines Radträgers zusätzlich zur Gewichts- und Kostenoptimierung ausgenutzt werden können.

Sofern das Material aus den für die Durchbrechungen vorgesehenen Stegbereichen nicht ausreicht, die erhabenen Abschnitte bilden zu können, ist es entsprechend Anspruch 2 zweckmäßig, dass auch Material aus den die Durchbrechungen umgebenden Stegbereichen bei einem spanlosen Umformprozess des Radträgers noch mit verformt wird.

Grundsätzlich genügt es, wenn die Stirnseite des Stegs des Radträgers mit erhabenen Abschnitten versehen wird. Bei Bedarf kann diese Maßnahme aber auch entsprechend den Merkmalen des Anspruchs 3 auf der zwischen den Schenkeln liegenden Innenseite des Stegs vorgesehen werden. Hierbei ist es ebenfalls möglich, das notwendige Material für die erhabenen Abschnitte aus den Stegbereichen zu formen, die für die Durchbrechungen vorgesehen sind und/oder gegebenenfalls auch aus den an die späteren Durchbrechungen angrenzenden Stegbereichen.

Entsprechend den Merkmalen des Anspruchs 4 ist es darüber hinaus möglich, zusätzliche Bearbeitungshöhe der erhabenen Abschnitte dadurch zu gewinnen, dass Bereiche des Stegs mit den erhabenen Abschnitten Bestandteile von lokalen Durchstellungen sind. Bei dieser Maßnahme wird mithin der Bereich um einen erhabenen Abschnitt oder der gesamte Bereich mit den erhabenen Abschnitten aus der Ebene des Stegs verlagert.

Die Erfindung ist nachfolgend anhand von in den Zeichnungen dargestellten Ausführungsbeispielen näher erläutert. Es zeigen:
- Figur 1: in der Perspektive einen Radträger einer Kraftfahrzeugachse;
- Figur 2: ebenfalls in der Perspektive den Radträger der Figur 1 in Richtung des Pfeils II betrachtet;
- Figur 3: in vergrößerter Darstellung einen vertikalen Querschnitt durch die Figur 1 entlang der Linie III-III in Richtung der Pfeile IIIa gesehen;
- Figur 4: in nochmals vergrößerter Darstellung den Ausschnitt IV der Figur 3
- Figur 5: eine Darstellung ähnlich derjenigen der Figur 4 gemäß einer weiteren Ausführungsform und
- Figur 6: eine Darstellung ähnlich derjenigen der Figur 5 gemäß einer dritten Ausführungsform.

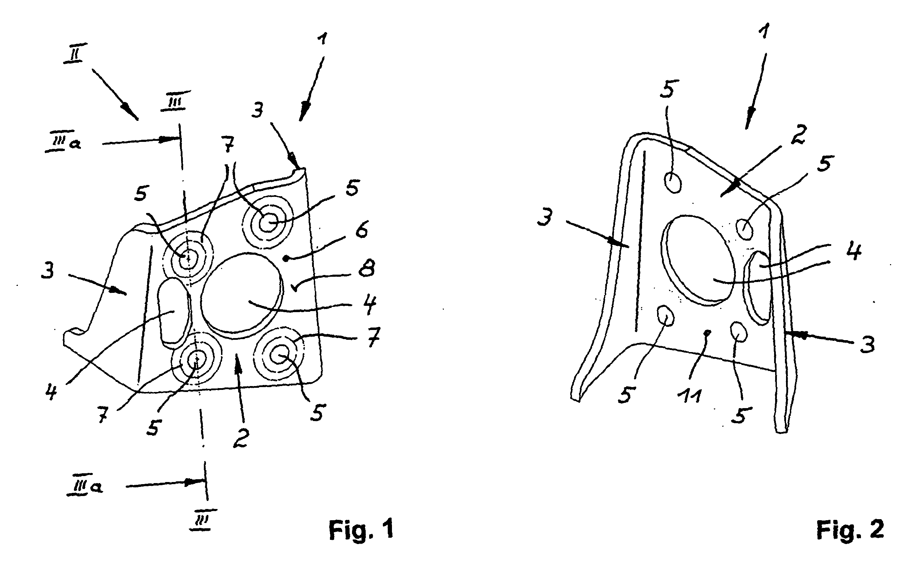

In den Figuren 1 und 2 ist mit 1 ein Radträger aus Stahlblech für eine ansonsten nicht näher dargestellte Kraftfahrzeugachse bezeichnet. Der Radträger 1 ist U-förmig ausgebildet und setzt sich aus einem Steg 2 sowie seitlich des Stegs 2 vorgesehenen Schenkeln 3 zusammen. Der Radträger 1 wird durch Abteilen aus einer ebenen Blechplatine mit überall gleicher Blechdicke und spanlosem Umformen hergestellt. Bei dem Abteilen aus der Blechplatine werden zugleich noch zwei Aussparungen 4 im Steg 2 hergestellt.

Der Steg 2 weist insgesamt vier Durchbrechungen 5 auf, die für den Durchtritt von nicht näher dargestellten Schraubbolzen zwecks Festlegung einer Radlagerung am Radträger 1 vorgesehen sind.

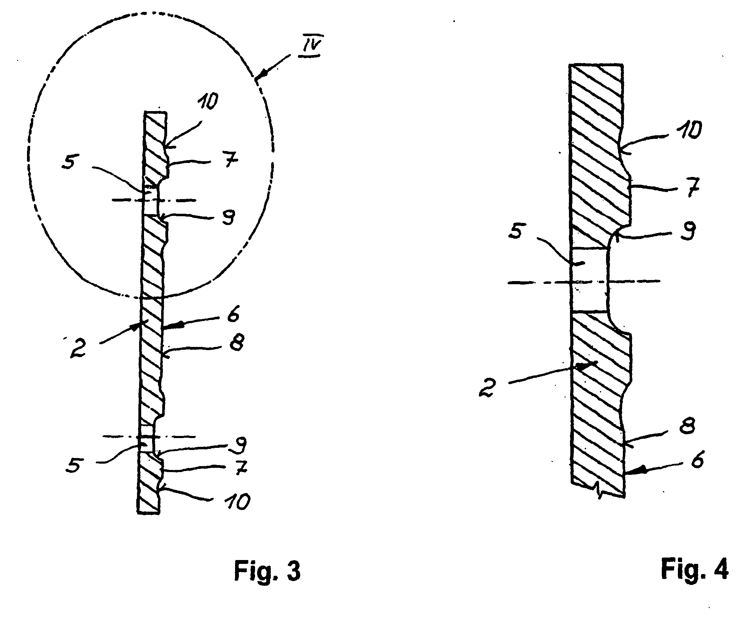

Wie bei gemeinsamer Betrachtung der Figuren 1 bis 4 zu erkennen ist, befinden sich auf der Stirnseite 6 des Stegs 2 des Radträgers 1 umfangsseitig der Durchbrechungen 5 erhabene Abschnitte 7, die gegenüber den angrenzenden Oberflächenbereichen 8 der Stirnseite 6 vorstehen. Diese erhabenen Abschnitte 7 dienen einer spanabhebenden Bearbeitung nach dem Anschweißen des Radträgers 1 an die Kraftfahrzeugachse, um zwecks Einstellung der Spur- und Sturzwerte der Räder des Kraftfahrzeugs die beim Anschweißen nicht zu vermeidenden Toleranzen aus Verzug und Positionierung auszugleichen.

Die erhabenen Abschnitte 7 werden beim Ausführungsbeispiel beim spanlosen Umformen des Radträgers 1 aus dem Material geformt, das sich einerseits in den Stegbereichen 9 für die späteren Durchbrechungen 5 und andererseits aus dem Material, welches sich in den die erhabenen Abschnitte 7 umgebenden Stegbereichen 10 befindet.

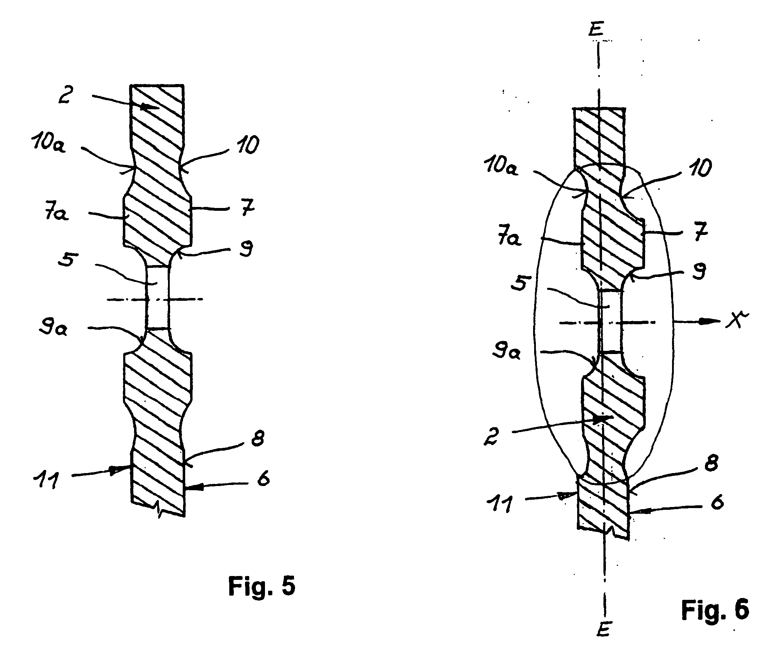

Bei Bedarf können, wie die Figur 5 erkennen lässt, auch auf der zwischen den Schenkeln 3 des Radträgers 1 liegenden Innenseite 11 des Stegs 2 im Wege der vorstehend beschriebenen spanlosen Umformung erhabene Abschnitte 7a gebildet sein, die teils aus dem Material der Stegbereiche 9a geformt werden, in denen die Durchbrechungen 5 eingebracht werden oder aus den die erhabenen Abschnitte 7a umgebenden Stegbereichen 10a.

In der Figur 6 ist eine Ausführungsform veranschaulicht, bei welcher der Steg 2 des Radträgers 1 im Bereich der erhabenen Abschnitte 7, 7a aus seiner Ebene E-E als lokale Durchstellung X in Pfeilrichtung spanlos verformt ist.

### Bezugszeichen:

- 1 -: Radträger
- 2 -: Steg v. 1
- 3 -: Schenkel v. 1
- 4 -: Aussparungen in 2
- 5 -: Durchbrechungen in 2
- 6 -: Stirnseite v. 2
- 7 -: erhabene Abschnitte
- 7a -: erhabene Abschnitte
- 8 -: Oberflächenbereiche v. 6
- 9 -: Stegbereiche
- 9a -: Stegbereiche
- 10 -: Stegbereiche
- 10a -: Stegbereiche
- 11 -: Innenseite v. 2

- E-E -: Ebene v. 2
- X -: lokale Durchstellung

## Patentansprüche

1. Radträger aus Stahlblech, der U-förmig ausgebildet ist und sich aus einem Steg (2) sowie seitlich des Stegs (2) vorgesehenen Schenkeln (3) zusammen setzt, wobei der Steg (2) mit Durchbrechungen (5) für Schraubbolzen versehen ist, **dadurch gekennzeichnet, dass** die Stirnseite (6) des Stegs (2) umfangsseitig der Durchbrechungen (5) mit gegenüber den angrenzenden Oberflächenbereichen (8) erhabenen Abschnitten (7) versehen ist, die durch spanlose Umformung aus dem Material der für die Durchbrechungen (5) vorgesehenen Stegbereiche (9) gebildet sind.

2. Radträger nach Anspruch 1, **dadurch gekennzeichnet, dass** die erhabenen Abschnitte (7) durch spanlose Umformung aus dem Material der die Durchbrechungen (5) umgebenden Stegbereiche (10) gebildet sind.

3. Radträger nach Anspruch 1 oder 2, **dadurch gekennzeichnet, dass** die zwischen den Schenkeln (3) liegende Innenseite (11) des Stegs (2) mit durch spanlose Umformung gebildeten erhabenen Abschnitten (7a) umfangsseitig der Durchbrechungen (5) versehen ist.

4. Radträger nach einem der Ansprüche 1 bis 3, **dadurch gekennzeichnet, dass** Bereiche des Stegs (2) mit den erhabenen Abschnitten (7; 7a) Bestandteile von lokalen Durchstellungen (X) sind.

## Claims

1. Steel plate wheel support which is of U-shaped design and is composed of a web (2) and limbs (3) provided at the sides of the web (2), the web (2) being provided with apertures (5) for studs, **characterized in that** the front side (6) of the web (2) is provided around the circumference of the apertures (5) with sections (7) which are raised with respect to the adjacent surface regions (8) and are formed by non-cutting shaping from the material of the web regions (9) provided for the apertures (5).

2. Wheel support according to Claim 1, **characterized in that** the raised sections (7) are formed by non-cutting shaping from the material of the web regions (10) surrounding the apertures (5).

3. Wheel support according to Claim 1 or 2, **characterized in that** the inner surface (11) of the web (2) that is situated between the limbs (3) is provided with raised sections (7a), formed by non-cutting shaping, around the circumference of the apertures (5).

4. wheel support according to one of Claims 1 to 3, **characterized in that** regions of the web (2) with the raised sections (7; 7a) are parts of local protrusions (X).

## Revendications

1. Support de roue en tôle d'acier, qui est constitué en forme de U et qui se compose d'une âme (2) ainsi que d'ailes (3) prévues latéralement à l'âme (2), l'âme (2) étant pourvue de découpes (5) pour des axes filetés,
**caractérisé en ce que** le côté frontal (6) de l'âme (2) sur le côté périphérique des découpes (5) est muni de tronçons en relief (5) en regard des zones de surfaces adjacentes (8), tronçons qui sont formés par déformation sans copeaux à partir du matériau des zones d'âme (9) prévues pour les découpes (5).

2. Support de roue selon la revendication 1,
**caractérisé en ce que** les tronçons en relief (7) sont formés par déformation sans copeaux à partir du matériau des zones d'âme (10) entourant les découpes (5).

3. Support de roue selon la revendication 1 ou 2,
**caractérisé en ce que** le côté intérieur (11) de l'âme (2) situé entre les ailes (3) est muni de tronçons en relief (7a) sur le côté périphérique des découpes (5), tronçons qui sont formés par déformation sans copeaux.

4. Support de roue selon les revendications 1 à 3,
**caractérisé en ce que** des zones de l'âme (2) avec les tronçons en relief (7 ; 7a) sont les composants de passages locaux (X).
